# EUROPÄISCHE PATENTANMELDUNG

(11) **EP 1 296 298 A1**
(43) Veröffentlichungstag der Anmeldung: **26.03.2003**
(21) Anmeldenummer: 01122422.7
(22) Anmeldetag: 20.09.2001
(51) Int. Cl.: G07F 19/00

(54) **Verfahren zur automatisierten Bezahlung von Waren oder Dienstleistungen**

(71) Anmelder: OK MAXIMUS GmbH, 40237 Düsseldorf (DE)
(72) Erfinder: Göllner, Thorsten, 40629 Düsseldorf (DE)
(74) Vertreter: Stenger, Watzke & Ring Patentanwälte

(57) **Zusammenfassung**

Die vorliegende Erfindung betrifft ein Verfahren zur automatisierten Abwicklung von Vorgängen zur Bezahlung von über Informationsdienstseiten (8, 9, 10) des Internet (7) angebotene Waren und/oder Dienstleistungen, dadurch gekennzeichnet, daß eine kundenseitige Rechenanlage (1) über eine erste Kommunikationsverbindung (6) mit einer Waren und/oder Dienstleistungen anbietenden Informationsdienstseite (8, 9) eines Anbieters verbunden wird, kundenseitig mittels einer Kommunikationseinrichtung (17, 18) über eine zweite Kommunikationsverbindung (19) wenigstens eine Information zur Autorisierung von Waren und/oder Dienstleistungen erfaßt wird und durch kundenseitige Eingabe der Autorisierungsinformation über die erste Kommunikationsverbindung (6) angebotene Waren und/oder Dienstleistungen für den Kunden (K) freigegeben werden, wobei die Bezahlung der Waren und/oder Dienstleistungen durch die zweite Kommunikationsverbindung (19) erfolgt.

## Beschreibung

Die vorliegende Erfindung betrifft ein Verfahren zur automatisierten Abwicklung von Vorgängen zur Bezahlung von über Informationsdienstseiten des Internet angebotene Waren und/oder Dienstleistungen.

Zur Bezahlung von über Informationsdienstseiten des Internet angebotene Waren und/oder Dienstleistungen ist es bisher erforderlich, daß ein Kunde einem Anbieter von Waren und/oder Dienstleistungen zur Bezahlung derselben einen Auftrag zur Abbuchung des für die Bezahlung der Waren und/oder Dienstleistungen vorgesehenen Geldbetrages von einem für den Kunden bei einer Kreditanstalt geführten Konto erteilt (sogenannter Abbuchungsauftrag). Dabei übermittelt der Kunde mittels einer kundenseitigen Rechenanlage über eine Kommunikationsverbindung zum Internet über das Internet kundenspezifische Informationen über das für den Kunden bei der Kreditanstalt geführte Konto, neben dem Namen des Kunden und der Kreditanstalt die sogenannte Bankleitzahl der Kreditanstalt und die Nummer des für den Kunden bei der Kreditanstalt geführten Kontos (Kontonummer).

Aufgrund von Ängsten der Kunden hinsichtlich einer unzureichenden Sicherheit der Vertraulichkeit dieser Informationen bei der Übertragung über das Internet vor einem möglichen Mißbrauch ist es ebenso bekannt, daß der Anbieter dem Kunden zur Bezahlung von über Informationsdienstseiten des Internet bestellter Waren und/oder Dienstleistungen vor oder mit Lieferung bzw. Erbringung von Waren bzw. Dienstleistungen per Briefpost eine Rechnung zustellt, die dann durch Überweisung des für die Waren und/oder Dienstleistungen beizubringenden Geldbetrags bezahlt werden. Dabei werden zumindest die kundenspezifischen Kontoinformationen nicht über das Internet vom Kunden zum Anbieter übertragen.

Viele Kunden nehmen dennoch von Bestellungen von über Informationsseiten des Internet angebotenen Waren und/oder Dienstleistungen Abstand, da eine anonyme Inanspruchnahme von über Informationsdienstseiten des Internet angebotene Waren und/oder Dienstleistungen nicht gegeben ist.

Der Erfindung liegt in Anbetracht dieses Standes der Technik die **Aufgabe** zugrunde, ein Verfahren zur automatisierten Abwicklung von Vorgängen zur Bezahlung von über Informationsdienstseiten des Internet angebotene Waren und/oder Dienstleistungen bereitzustellen, welches dem Kunden eine anonyme Inanspruchnahme der über Informationsdienstseiten des Internet angebotenen Waren und/oder Dienstleistungen ermöglicht und für den Anbieter eine Bezahlung der in Anspruch genommenen Waren und/oder Dienstleistungen sicherstellt.

Die Aufgabe wird erfindungsgemäß dadurch **gelöst**, daß eine kundenseitige Rechenanlage über eine erste Kommunikationsverbindung mit einer Waren und/oder Dienstleistungen anbietenden Informationsdienstseite eines Anbieters verbunden wird, kundenseitig mittels einer Kommunikationseinrichtung über eine zweite Kommunikationsverbindung wenigstens eine Information zur Autorisierung von Waren und/oder Dienstleistungen erfaßt wird und durch kundenseitige Eingabe der Autorisierungsinformation über die erste Kommunikationsverbindung angebotene Waren und/oder Dienstleistungen für den Kunden freigegeben werden, wobei die Bezahlung der Waren und/oder Dienstleistungen durch die zweite Kommunikationsverbindung erfolgt.

Durch die erfindungsgemäße Verwendung von zwei voneinander unabhängigen Kommunikationsverbindungen ist für den Kunden eine anonymisierte Abwicklung der Bezahlung von Waren und/oder Dienstleistungen gegeben. Der Leistungsaustausch zwischen Kunde und Anbieter erfolgt erfindungsgemäß über die zweite Kommunikationsverbindung, wobei der Kunde mittels der Autorisierungsinformation Zugriff auf die Waren und/oder Dienstleistungen erhält und der Anbieter durch die zweite Kommunikationsverbindung bezahlt wird. Durch die zweite Kommunikationsverbindung wird somit für den Anbieter die Bezahlung sichergestellt.

In einer vorteilhaften Ausgestaltung der Erfindung werden die Waren und/oder Dienstleistungen für die Zeitdauer der Aufrechterhaltung der zweiten Kommunikationsverbindung freigegeben. Diese Ausgestaltung des Verfahrens ist insbesondere zur Abwicklung von Bezahlungsvorgängen geeignet, bei welchen die Waren und/oder Dienstleistungen in elektronischer Form über das Internet übertragen werden, beispielsweise Photographien, Videos, Musikstücke; Töne oder dergleichen als Waren bzw. Live-Konzerte oder dergleichen als Dienstleistung.

In einer weiteren vorteilhaften Ausgestaltung der Erfindung wird die Autorisierung mit Trennung der zweiten Kommunikationsverbindung gelöscht. Dadurch wird sichergestellt, daß kundenseitig in Anspruch genommene Waren und/oder Dienstleistungen nicht durch nochmalige Verwendung der Autorisierungsinformation ohne Bezahlung inanspruchnehmbar sind.

In einer besonders vorteilhaften Ausgestaltung der Erfindung ist die zweite Kommunikationsverbindung eine Telefonverbindung, die kundenseitige Kommunikationseinrichtung ein Telefon oder ein Mobilfunktelefon. Dem Kunden werden die in Anspruch genommenen Waren und/oder Dienstleistungen so anonymisiert mittels einer Telefonrechnung in Rechnung gestellt. Der Anbieter wird von der dem Kunden die Telefonverbindung bereitstellenden Telekommunikationsgesellschaft bezahlt.

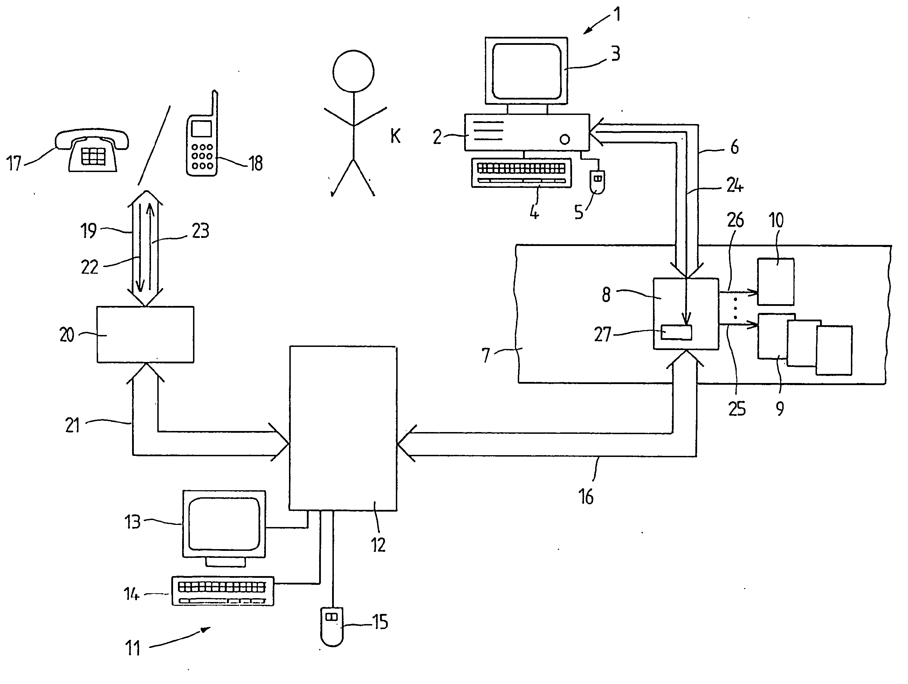

Weitere Einzelheiten, Merkmale und Vorteile der Erfindung werden nachfolgend anhand des in der Figur dargestellten Ausführungsbeispiels näher erläutert. Dabei zeigt die Figur in einem Blockdiagramm den Ablauf des erfindungsgemäßen Verfahrens.

Ein Kunde K nimmt mit seiner Rechenanlage 1, umfassend eine Recheneinrichtung 2, einen Monitor 3 als Anzeigeeinrichtung und eine Tastatur 4 sowie eine Maus 5 als Eingabeeinrichtung, über eine erste Kommunikationsverbindung 6 zum Internet 7 Verbindung zu einer Informationsdienststartseite 8 eines Waren und/oder Dienstleistungen anbietenden Anbieters auf.

Die Informationsdienststartseite 8 und dieser über sogenannte Links nachgeschaltete Informationsdienstseiten 9 und 10 des Anbieters werden seitens einer Rechenanlage 11 über eine Kommunikationsverbindung 16 bereitgestellt. Die Rechenanlage 11 weist zu Service- und Wartungszwecken der Informationsdienstseiten 8, 9 und 10 neben einer Recheneinrichtung 12 einen Monitor 13 als Anzeigeeinrichtung sowie eine Tastatur 14 und eine Maus 15 als Eingabeeinrichtung auf.

Der Kunde K nimmt mittels einer Kommunikationseinrichtung, vorliegend einem Festnetztelefon 17 oder alternativ einem Mobilfunktelefon 18, über eine zweite Kommunikationsverbindung 19 Kontakt zu einer anbieterseitigen Telekommunikationsanlage 20 auf. Die Telekommunikationsanlage 20 ist vorliegend über eine Verbindung 21 mit der Recheneinrichtung 12 der Rechenanlage 11 verbunden und wird von dieser gesteuert.

Über die Kommunikationsverbindung 6 wird die Informationsdienststartseite 8 eines Waren und/oder Dienstleistungen anbietenden Anbieters an die Recheneinrichtung 2 der Rechenanlage 1 des Kunden K übertragen und seitens des Monitors 3 zur Anzeige gebracht. Auf der Informationsdienststartseite 8 erhält der Kunde K als Information eine bestimmte Telefonnummer, welche er zum Erhalt einer Autorisierungsinformation zur Freigabe ihn interessierender Waren und/oder Dienstleistungen mittels dem Festnetztelefon 17 bzw. dem Mobilfunktelefon 18 über die zweite Kommunikationsverbindung 19 anrufen soll, um eine Autorisierungsinformation zur Freigabe der interessierenden Waren und/oder Dienstleistungen zu erhalten. Mittels des Festnetztelefons 17 bzw. die Mobilfunktelefone 18 wird der Kunde K nach Eingabe der seitens des Monitors 3 angezeigten Telefonnummer über die zweite Kommunikationsverbindung 19 mit der Telekommunikationsanlage 20 verbunden. Diese Verbindung ist in der Figur mit dem in der Figur mit dem Bezugszeichen 22 versehenen Pfeil dargestellt. Die Telekommunikationsanlage 20 sendet über die zweite Kommunikationsverbindung 19 dem Kunden K an bzw. in sein Festnetztelefon 17 bzw. sein Mobilfunktelefon 18 eine Autorisierungsinformation, beispielsweise als Sprachansage, als sogenannte SMS (Short Message Service) oder dergleichen. Diese Autorisierungsinformation wird von dem Kunden K über die Tastatur 4 der Rechenanlage 1 eingegeben und über die erste Kommunikationsverbindung 6 an die Informationsdienststartseite 8 übertragen, wie anhand des in der Figur mit 24 gekennzeichneten Pfeils dargestellt.

Der Telekommunikationsanlage 20 wird die Autorisierungsinformation über die Verbindung 21 von der Recheneinrichtung 12 der Rechenanlage 11 zur Verfügung gestellt. Dabei kann die Autorisierungsinformation aus einer Datenbank der Recheneinrichtung 12 der Rechenanlage 11 ausgelesen werden oder aber mit der Abfrage einer Autorisierungsinformation 22 seitens der Recheneinrichtung 12 erzeugt und in einer Datenbank gespeichert werden. Über die Kommunikationsverbindung 16 wird die von dem Kunden K über die erste Kommunikationsverbindung 6 zur Autorisierung 24 eingegebene Autorisierungsinformation 27 mit der seitens der Recheneinrichtung 12 der Rechenanlage gespeicherten Autorisierungsinformation verglichen. Bei Übereinstimmung der durch Autorisierung eingegebenen Autorisierungsinformation und der in der Recheneinrichtung 12 der Rechenanlage 11 gespeicherten Autorisierungsinformation wird ein von der Informationsdienststartseite 8 abgehender Link 25 bzw. 26 zu Informationsdienstseiten 9 bzw. 10 erzeugt und damit entsprechende Waren und/oder Dienstleistungen, beispielsweise in elektronischer Form vorliegende Photographien, Musikstücke oder ein sogenanntes Videostream, über die Kommunikationsverbindung 6 seitens der Rechenanlage 1 des Kunden K eingespielt bzw. zur Anzeige gebracht, wenn dieser den Link 25 bzw. 26 üblicherweise durch Anklicken aus- bzw. anwählt.

Über die Verbindung 21 überwacht die Recheneinrichtung 12 die Rechenanlage 11 die Aufrechterhaltung der Kommunikationsverbindung 19 zwischen dem kundenseitigen Festnetztelefon 17 bzw. Mobilfunktelefon 18 und der Telekommunikationsanlage 20. Bei Unterbrechung der Kommunikationsverbindung 19 sendet die Telekommunikationsanlage 20 der Recheneinrichtung 12 der Rechenanlage 11 über die Verbindung 21 ein entsprechendes Signal, welches die Recheneinrichtung 12 dazu anhält, die Autorisierungsinformation für den Zugang zu den Informationsdienstseiten 9 bzw. 10 zu löschen. Damit ist die Autorisierungsinformation des Kunden K unbrauchbar und ein Zugriff auf die Informationsdienstseiten 9 und 10 nicht mehr möglich.

Die Bezahlung des Anbieters ist durch die zweite Kommunikationsverbindung 19 gegeben, welche dem Kunden K im Rahmen dessen Telefonrechnung Verbindungsentgelte in Rechnung stellt, die zur Bezahlung des Anbieters verwendet werden.

Mit dem erfindungsgemäßen Verfahren bleibt der Kunde K so vollkommen anonym.

Das in der Figur dargestellte Ausführungsbeispiel dient lediglich der Erläuterung der Erfindung und ist für diese nicht beschränkend. So kann durch die zweite Kommunikationsverbindung auch eine Bezahlung erfolgen, ohne daß die Kommunikationsverbindung 19 zwischen dem Kunden K und der Telekommunikationsanlage 20 aufrechterhalten werden muß.

### Bezugszeichenliste

- 1: Rechenanlage
- 2: Recheneinrichtung
- 3: Monitor
- 4: Tastatur
- 5: Maus
- 6: Kommunikationsverbindung (erste)
- 7: Internet
- 8: Informationsdienststartseite
- 9: Informationsdienstseite
- 10: Informationsdienstseite
- 11: Rechenanlage
- 12: Recheneinrichtung
- 13: Monitor
- 14: Tastatur
- 15: Maus
- 16: Kommunikationsverbindung
- 17: Festnetztelefon
- 18: Mobilfunktelefon
- 19: Kommunikationsverbindung (zweite)
- 20: Telekommunikationsanlage
- 21: Verbindung
- 22: Abfrage (Autorisierungsinformation)
- 23: Ansage (Autorisierungsinformation)
- 24: Autorisierung
- 25: Link
- 26: Link
- 27: Autorisierungsinformation
- K: Kunde

## Patentansprüche

1. Verfahren zur automatisierten Abwicklung von Vorgängen zur Bezahlung von über Informationsdienstseiten (8, 9, 10) des Internet (7) angebotene Waren und/oder Dienstleistungen, **dadurch gekennzeichnet, daß** eine kundenseitige Rechenanlage (1) über eine erste Kommunikationsverbindung (6) mit einer Waren und/oder Dienstleistungen anbietenden Informationsdienstseite (8, 9) eines Anbieters verbunden wird, kundenseitig mittels einer Kommunikationseinrichtung (17, 18) über eine zweite Kommunikationsverbindung (19) wenigstens eine Information zur Autorisierung von Waren und/oder Dienstleistungen erfaßt wird und durch kundenseitige Eingabe der Autorisierungsinformation über die erste Kommunikationsverbindung (6) angebotene Waren und/oder Dienstleistungen für den Kunden (K) freigegeben werden, wobei die Bezahlung der Waren und/oder Dienstleistungen durch die zweite Kommunikationsverbindung (19) erfolgt.

2. Verfahren nach Anspruch 1, **dadurch gekennzeichnet, daß** die Waren und/oder Dienstleistungen während der Aufrechterhaltung der zweiten Kommunikationsverbindung (19) freigegeben werden.

3. Verfahren nach Anspruch 1 oder Anspruch 2, **dadurch gekennzeichnet, daß** die Autorisierung mit Trennung der zweiten Kommunikationsverbindung (19) gelöscht wird.

4. Verfahren nach einem der Ansprüche 1 bis 3, **dadurch gekennzeichnet, daß** die zweite Kommunikationsverbindung eine Telekommunikationsverbindung ist und die Bezahlung des Anbieters über die Telekommunikationsrechnung des Kunden (K) erfolgt.

5. Verfahren nach einem der vorhergehenden Ansprüche, **dadurch gekennzeichnet, daß** als Waren und/oder Dienstleistungen in elektronischer Form vorliegende Bilder, Filme und/oder Musikstücke oder Töne angeboten werden.
